# EUROPEAN PATENT SPECIFICATION

(11) **EP 4 466 098 B1**
(45) Date of publication and mention of the grant of the patent: **11.03.2026**
(21) Application number: 23701096.2
(22) Date of filing: 18.01.2023
(51) Int. Cl.: B01J 23/755, B01J 33/00

(54) **PACKAGED HYDROGENATION CATALYST**
VERPACKTER HYDRIERUNGSKATALYSATOR
CATALYSEUR D'HYDROGÉNATION EMBALLÉ

(30) Priority: 19.01.2022 EP 22152249
(43) Date of publication of application: 27.11.2024
(73) Proprietor: IQatalyst B.V., 3454 PK De Meern (NL)
(72) Inventor: YARULINA, Irina, 3454 PK De Meern (NL); KAMSMA, Geertruida Agatha Marina, 3454 PK De Meern (NL); GROEN, Christina Aleida Maria, 3454 PK De Meern (NL); TERÖRDE, Robert Johan Andreas Maria, 3454 PK De Meern (NL); REESINK, Bernard Hendrik, 3454 PK De Meern (NL)
(74) Representative: V.O.
(86) International application number: PCT/EP2023/051104
(87) International publication number: WO 2023/139109

(56) References cited:
- EP-A1- 2 781 262
- WO-A1-2008/110020
- WO-A1-2017/208164
- US-A- 5 106 800

## Description

### TECHNICAL FIELD

The present invention relates to a specific packaged hydrogenation catalyst comprising a packaging and a hydrogenation catalyst, wherein the packaging comprises a specific polymer, and wherein the packaged hydrogenation catalyst has a specific weight ratio of the polymer to the hydrogenation catalyst enclosed in the packaging. Further, the present invention relates to a process for preparing said specific packaged hydrogenation catalyst, and a packaged hydrogenation catalyst obtained or obtainable by said process. In addition thereto, the present invention relates to a use of the packaged hydrogenation catalyst according to the present invention and a process for the hydrogenation of an unsaturated hydrocarbon feedstock.

### INTRODUCTION

The market for hydrogenated petroleum resins, used as adhesives in for example packaging and nonwovens, is growing. Hydrogenation of these resins improves the thermal stability and produces a desired water white product. WO 2015/008247 A2 for example relates to a hydrogenation catalyst comprising a Ni/Si/Al mixed oxide. Currently, hydrogenation catalysts are often produced by precipitation, reduction and stabilization. The hydrogenation catalyst can be in the form of a powder, granules, flakes, or pellets.

Typically, the last step of a manufacturing process for preparing a hydrogenation catalyst includes packaging of a hydrogenation catalyst into a packaging, e.g. into a plastic bag, or protecting the hydrogenation catalyst with a coating. For example, a powder of a hydrogenation catalyst can be packed in polyethylene bags for protecting the catalyst. Other protecting measures include mixing a hydrogenation catalyst with a molten polymer, as for example disclosed in WO 2017/208164 A1.

WO 2008/110020A1 relates to packaging material for the storage of ethane sensitive produce and discloses catalytic foils comprising protective polystyrene cover.

Protecting a hydrogenation catalyst, e. g. by packaging into a plastic bag, allows avoiding Ni dust related issues on site and complying with current emission regulations. Often, application of bags cannot be avoided but it is sometimes perceived negatively by appliers, who have to work with a hydrogenation catalyst in such a packaging. Disadvantages include the necessity of additional process steps, in particular opening of each bag and discharging its content into a reactor, e.g. into a mixing tank. However, the powder remaining in the bag after discharging is difficult to clear out from the bag. This makes a complete discharge difficult resulting in a loss of resources. Further, the hydrogenation catalyst, especially if present as a powder, can be exposed to air while discharging from a bag. An additional disadvantage is that the plastic bags have to be disposed while considering Ni dust containment issues.

Use of a protective coating on the other hand as disclosed in WO 2017/208164 A1 has the disadvantage that single particles are coated resulting in a comparatively high need of polymer, whereas for example a packaging within a bag generally allows a higher ratio of packaged catalyst to polymer. A further disadvantage of using a protective coating is that cost-intensive process steps are needed including melting of a polymer, mixing of the molten polymer with the hydrogenation catalyst in an inert gas atmosphere for forming a slurry, and cooling of the slurry to obtain flakes of the coated catalyst.

### DETAILED DESCRIPTION

It was therefore an object of the present invention to provide a specific packaged hydrogenation catalyst allowing a time- and cost-efficient processing thereof, and in particular for avoiding the disadvantages mentioned above. Thus, it was an object of the present invention to provide a packaged hydrogenation catalyst particularly allowing a better handling thereof, especially considering the potentially pyrophoric and carcinogenic nature of the enclosed hydrogenation catalyst. Further, it was also an object of the present invention to provide a packaged hydrogenation catalyst allowing use of a comparatively low amount of packaging material relative to the amount of catalyst. In addition thereto, it was an object to provide a packaged hydrogenation catalyst which can be prepared in a time- and cost-efficient manner.

Thus, it has surprisingly been found that a packaged hydrogenation catalyst which comprises a packaging comprising a specific polymer and a hydrogenation catalyst enclosed in the packaging having a specific weight ratio of the polymer to the hydrogenation catalyst allows putting an entire (un-opened) packaged hydrogenation catalyst in a reaction mixture without the necessity to open the packaging for discharge of the contents. Further, it was surprisingly found that the packaged hydrogenation catalyst can be prepared by a comparatively time- and cost-efficient process. The packaged hydrogenation catalyst according to the present invention was also tested in a hydrogenation reaction of hydrotreated light distillate (petroleum) and hydrotreated heavy naphtha (petroleum). In the context of the present invention, hydrotreated light distillates (petroleum) are to be understood as comprising aliphatic and alicyclic hydrocarbons with carbon numbers predominantly in the range of C9 to C16, and hydrotreated heavy naphtha (petroleum) as comprising hydrocarbons with carbon numbers predominantly in the range between C6 and C13.

Therefore, the present invention relates to a packaged hydrogenation catalyst comprising a packaging and a hydrogenation catalyst,
wherein the hydrogenation catalyst is enclosed within the packaging,
wherein the hydrogenation catalyst comprises Ni,
wherein the packaging is sealed shut in a gas-tight manner,
wherein the packaging material comprises a polymer,
wherein the polymer comprises from 60 to 100 weight-% of styrene repeating units, and
wherein a weight ratio of the hydrogenation catalyst, calculated as total weight of the hydrogenation catalyst, to the polymer, calculated as total weight of the polymer, is in the range of from 50,000:1 to 1:1.

It is preferred that the packaging is sealed shut by means of thermal bonding of the packaging, wherein the packaging is sealed shut preferably by welding of the packaging.

It is preferred that one or more inert gases, the inert gases preferably comprising one or more of N₂ and Ar, are further enclosed within the packaging.

It is preferred that the contents enclosed within the packaging comprise from 0 to 0.1 weight-% of one or more of O₂ and H₂O, preferably from 0 to 0.01 weight-% of one or more of O₂ and H₂O, based on the total weight of the contents enclosed within the packaging.

It is preferred that the packaging is vacuum-sealed.

It is preferred that the polymer comprised in the packaging material has a solubility of at least 1 g/l, preferably in the range of from 1 to 100 g/l, more preferably in the range of from 1.25 to 75 g/l, more preferably in the range of from 1.5 to 50 g/l, more preferably in the range of from 1.75 to 35 g/l, more preferably in the range of from 2 to 20 g/l, in toluene, wherein the solubility of the polymer comprised in the packaging material is determined in toluene having a temperature of 25 °C, wherein the solubility of the polymer is preferably determined in toluene under a pressure of 101.3 kPa (1.013 bar), wherein the solubility is preferably determined according to Reference Example 8.

It is preferred that the polymer comprised in the packaging material comprises from 60 to 95 weight-%, preferably from 63 to 80 weight-%, more preferably from 65 to 75 weight-%, of styrene repeating units.

It is preferred that the polymer comprised in the packaging material is an alternating copolymer, a random copolymer, a block copolymer, or a graft copolymer.

It is preferred that the polymer comprised in the packaging material comprises, preferably consist of, one or more polystyrenes and styrene-butadiene copolymers, preferably one or more styrene-butadiene copolymers.

In the case where the comprises, preferably consist of, one or more polystyrenes and styrene-butadiene copolymers, it is preferred that the polystyrenes are biaxially oriented polystyrenes.

Further in the case where the comprises, preferably consist of, one or more polystyrenes and styrene-butadiene copolymers, it is preferred that the polymer comprised in the packaging material comprises a styrene-butadiene copolymer, wherein the styrene-butadiene copolymer comprises, preferably consists of, an alternating styrene-butadiene copolymer, a random styrene-butadiene copolymer, a styrene-butadiene block copolymer, or a styrene-butadiene graft copolymer, more preferably a styrene-butadiene block copolymer.

Further in the case where the comprises, preferably consist of, one or more polystyrenes and styrene-butadiene copolymers, it is preferred that the polymer comprised in the packaging material comprises a styrene-butadiene copolymer, wherein the styrene-butadiene copolymer comprises from 5 to 40 weight-%, more preferably from 20 to 37 weight-%, more preferably from 25 to 35 weight-%, of butadiene repeating units.

It is preferred that the packaging material further comprises one or more polybutadienes, polyesters, and polyethers, wherein the polyesters preferably comprise an aromatic copolyester, more preferably an amorphous polyethylene terephthalate.

It is preferred that the packaging material comprises from 0 to 1 weight-%, more preferably from 0 to 0.1 weight-%, of one or more of polyethylene and polypropylene, preferably of polyethylene and polypropylene.

It is preferred that the polymer comprised in the packaging material has an average molecular weight in the range of from 40 000 to 500 000 Daltons, more preferably in the range of from 50 000 to 400 000 Daltons, more preferably in the range of from 55 000 to 350 000 Daltons, wherein the average molecular weight is preferably determined according to Gel Permeation Chromatography.

It is preferred that the packaging has the form of a bag, preferably a ziplock bag, a foil, a film, an envelope, a wrapper, a shell, or a mantle.

It is preferred that the packaging encloses a volume in the range of from 15 to 35 dm³, more preferably in the range of from 20 to 30 dm³, more preferably in the range of from 23 to 27 dm³.

It is preferred that the packaged hydrogenation catalyst comprises the polymer in an amount in the range of from 1 to 50 g, more preferably in the range of from 2 to 35 g, more preferably in the range of from 5 to 15 g, calculated as total weight of the polymer.

It is preferred that the packaging material comprises the polymer in an amount ranging from 50 to 100 wt.-%, more preferably from 70 to 100 wt.-%, more preferably from 80 to 100 wt.-%, more preferably from 90 to 100 wt.-%, more preferably from 95 to 100 wt.-%, more preferably from 98 to 100 wt.-%, more preferably from 99 to 100 wt.-%, and more preferably from 99.9 to 100 wt.-%, based on the total weight of the packaging material.

It is preferred that the hydrogenation catalyst in an amount in the range of from 5 to 6000 g, more preferably in the range of from 100 to 5500 g, more preferably in the range of from 4700 to 5300 g, calculated as total weight of the hydrogenation catalyst.

It is preferred that the packaged hydrogenation catalyst has a weight ratio of the hydrogenation catalyst, calculated as total weight of the hydrogenation catalyst, to the polymer, calculated as total weight of the polymer, in the range of from 50,000:1 to 1:1, more preferably in the range of from 10,000:1 to 1:1, more preferably in the range of from 5,000:1 to 1:1, more preferably in the range of from 2,000:1 to 1:1, more preferably in the range of from 1,000:1 to 1:1, more preferably in the range of from 250:1 to 1:1, preferably in the range of from 150:1 to 1:1, more preferably in the range of from 100:1 to 1:1, more preferably in the range of from 10:1 to 1:1.

It is preferred that the packaged hydrogenation catalyst has a weight ratio of the hydrogenation catalyst, calculated as total weight of the hydrogenation catalyst, to the polymer, calculated as total weight of the polymer, in the range of from 50,000:1 to 1:1, more preferably in the range of from 10,000:1 to 10:1, more preferably in the range of from 5,000:1 to 20:1, more preferably in the range of from 2,000:1 to 50:1, more preferably in the range of from 1,000:1 to 100:1, more preferably in the range of from 500:1 to 150:1, more preferably in the range of from 400:1 to 180:1, more preferably in the range of from 300:1 to 200:1, more preferably in the range of from 275:1 to 225:1.

It is preferred that the packaging comprises, preferably consists of, a film F₁ and optionally a film F₂, wherein F₁ comprises, preferably consists of, the polymer as defined in any one of the embodiments disclosed herein,
and wherein F₂ preferably comprises, more preferably consists of, a polymer as defined in any one of the embodiments disclosed herein,
wherein the packaging more preferably comprises a film F₁ and a film F₂, wherein F₁ comprises, preferably consists of, the polymer as defined in any one of the embodiments disclosed herein, wherein F₂ comprises, preferably consists of, a polymer as defined in any one of the embodiments disclosed herein, wherein F₂ more preferably has the same chemical and physical properties as F₁.

In the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a surface weight in the range of from 20 to 150 g/m², preferably in the range of from 45 to 120 g/m², more preferably in the range of from 47 to 116 g/m².

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a thickness in the range of from 10 to 150 micrometer, more preferably in the range of from 40 to 110 micrometer, more preferably in the range of from 45 to 105 micrometer.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a density in the range of from 9.50 to 1.30 g/cm³, more preferably in the range of from 9.60 to 1.20 g/cm³, more preferably in the range of from 9.75 to 1.10 g/cm³.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a longitudinal tensile strength in the range of from 35 to 44 N/mm², more preferably in the range of from 37 to 42 N/mm², more preferably in the range of from 39 to 40 N/mm², wherein the longitudinal tensile strength is preferably determined according to ISO 527-3:2018.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a transverse tensile strength in the range of from 31 to 48 N/mm², more preferably in the range of from 35 to 44 N/mm², more preferably in the range of from 39 to 40 N/mm², wherein the transverse tensile strength is preferably determined according to ISO 527-3:2018.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a longitudinal elongation at tear in the range of from 0.1 to 50 %, more preferably in the range of from 1 to 10 %, more preferably in the range of from 3 to 4 %, wherein the longitudinal elongation at tear is preferably determined according to ISO 527-3:2018.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a transverse elongation at tear in the range of from 0.1 to 50 %, more preferably in the range of from 1 to 10 %, more preferably in the range of from 3 to 4 %, wherein the transverse elongation at tear is preferably determined according to ISO 527-3:2018.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has an longitudinal edge strength in the range of from 15 to 40 N, more preferably in the range of from 22 to 33 N, more preferably in the range of from 24 to 31 N.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a transverse edge strength in the range of from 15 to 40 N, more preferably in the range of from 22 to 33 N, more preferably in the range of from 24 to 31 N.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a melt volume flow rate in the range of from 5 to 25 cm³/10 min, more preferably in the range of from 10 to 20 cm³/10 min, more preferably in the range of from 13 to 19 cm³/10 min, wherein the melt volume flow rate is preferably determined at a temperature of 200 °C, wherein the melt volume flow rate is more preferably determined according to ISO 1133.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a shore hardness in the range of from 70 to 100, more preferably in the range of from 75 to 90, more preferably in the range of from 79 to 85, on scale A (for flexible types).

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a shore hardness in the range of from 15 to 40, more preferably in the range of from 25 to 33, more preferably in the range of from 27 to 31, on scale D (for rigid types).

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a Vicat A in the range of from 25 to 50 °C, more preferably in the range of from 32 to 41 °C, more preferably in the range of from 34 to 39 °C, wherein the Vicat A is preferably determined according to ISO 306.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a Vicat B in the range of from 25 to 45 °C, more preferably in the range of from 32 to 38 °C, more preferably in the range of from 34 to 36 °C, wherein the Vicat B is preferably determined according to ISO 306.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a tensile modulus in the range of from 10 to 1000 MPa, more preferably in the range of from 25 to 950 MPa, more preferably in the range of from 40 to 910 MPa, wherein the tensile modulus is preferably determined according to ISO 527-3:2018.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has an elongation at break in the range of from 250 to 1000 %, more preferably in the range of from 400 to 800 %, more preferably in the range of from 450 to 700 %, wherein the elongation at break is preferably determined according to ISO 527-3:2018.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a tensile stress at break in the range of from 10 to 75 MPa, more preferably in the range of from 25 to 40 MPa, more preferably in the range of from 30 to 36 MPa.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a refractive index in the range of from 1.555 to 1.570, more preferably in the range of from 1.560 to 1.565.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a yield stress in the range of from 0.1 to 30 MPa, more preferably in the range of from 1 to 20 MPa, more preferably in the range of from 3 to 16 MPa, wherein the yield stress is preferably determined according to ISO 527-3:2018.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a yield strain in the range of from 0.1 to 10 %, more preferably in the range of from 0.5 to 7 %, more preferably in the range of from 1 to 6 %, wherein the yield strain is preferably determined according to ISO 527-3:2018.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a nominal strain at break of greater than 40 %, more preferably of greater than 50 %, wherein the nominal strain at break is preferably determined according to ISO 527.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another does not break in a Charpy impact strength test at a temperature of 23 °C, wherein the Charpy impact strength test is preferably conducted according to ISO 179/1eU.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another does not break in a Charpy impact strength test at a temperature of -30 °C, wherein the Charpy impact strength test is preferably conducted according to ISO 179/1eU.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another does not break in a Charpy notched impact strength test at a temperature of 23 °C, wherein the Charpy notched impact strength test is preferably conducted according to ISO 179/1eA.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a Charpy notched impact strength at a temperature of 23 °C in the range of from 65 to 100 kJ/m², more preferably in the range of from 75 to 90 kJ/m², more preferably in the range of from 79 to 86 kJ/m², wherein the Charpy notched impact strength is preferably determined according to ISO 179/1eA.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a Charpy notched impact strength at a temperature of -30 °C in the range of from 65 to 95 kJ/m², more preferably in the range of from 75 to 85 kJ/m², more preferably in the range of from 78 to 82 kJ/m², wherein the Charpy notched impact strength is preferably determined according to ISO 179/1eA.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a volume resistivity of greater than 0.5.10¹³ Ohm·m, more preferably in the range of from 0.5 to 10·10³ Ohm·m, wherein the volume resistivity is preferably determined according to IEC 62631-2-1.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a surface resistivity of greater than 0.5·10¹⁵ Ohm, more preferably in the range of from 0.5 to 10·10¹⁵ Ohm, wherein the surface resistivity is preferably determined according to IEC 62631-2-1.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a water absorption in the range of from 0.01 to 0.15 %, more preferably in the range of from 0.04 to 0.11 %, more preferably in the range of from 0.06 to 0.08 %.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a humidity absorption in the range of from 0.01 to 0.15 %, more preferably in the range of from 0.04 to 0.11 %, more preferably in the range of from 0.06 to 0.08 %.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a Elmendorf tear resistance (parallel) in the range of from 600 to 700 N, more preferably in the range of from 620 to 680 N, more preferably in the range of from 640 to 660 N, wherein the Elmendorf tear resistance (parallel) is preferably determined according to ISO 6383-2.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a Elmendorf tear resistance (normal) in the range of from 750 to 850 N, more preferably in the range of from 770 to 830 N, more preferably in the range of from 790 to 810 N, wherein the Elmendorf tear resistance (normal) is preferably determined according to ISO 6383-2.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a coefficient of linear thermal expansion (parallel) in the range of from 60 to 90·10⁻⁶/K, more preferably in the range of from 70 to 80·10⁻⁶/K, more preferably in the range of from 73 to 77·10⁻⁶/K, wherein the coefficient of linear thermal expansion (parallel) is preferably determined according to ISO 11359-1/-2.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a water vapor transmission rate in the range of from 0.20 to 0.34·g/(m²·d), more preferably in the range of from 0.24 to 0.30 g/(m²·d), more preferably in the range of from 0.26 to 0.28 g/(m²·d), wherein the water vapor transmission rate is preferably determined at a temperature of 23 °C and a relative humidity of 85 %, wherein the water vapor transmission rate is more preferably determined according to ISO 15106-1/-2.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has an oxygen transmission rate in the range of from 25.0 to 30.0-cm³/(m²·d·bar), more preferably in the range of from 26.5 to 28.0 cm³/(m²·d·bar), more preferably in the range of from 27.0 to 27.4 cm³/(m²·d·bar), wherein the oxygen transmission rate is preferably determined at a temperature of 23 °C and a relative humidity of 0 %, wherein the oxygen transmission rate is more preferably determined according to ISO 15106-1/-2.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a temperature of deflection under load in the range of from 45 to 57·°C, more preferably in the range of from 48 to 54 °C, more preferably in the range of from 50 to 52 °C, wherein the temperature of deflection under load is determined at a pressure of 1.80 MPa, wherein the temperature of deflection under load is preferably determined according to ISO 75-1/-2.

Further in the case where the packaging comprises, preferably consists of, a film F₁ and optionally a film F₂, wherein the film F₁ and the optional film F₂ are as defined in any one of the embodiments disclosed herein, it is preferred that the film F₁ and preferably the film F₂ independently from one another has a temperature of deflection under load in the range of from 55 to 69·°C, preferably in the range of from 58 to 66 °C, more preferably in the range of from 60 to 64 °C, wherein the temperature of deflection under load is determined at a pressure of 0.45 MPa, wherein the temperature of deflection under load is preferably determined according to ISO 75-1/-2.

It is preferred that the hydrogenation catalyst is in the form of one or more of a powder, granules, flakes, and pellets.

It is preferred that the hydrogenation catalyst comprises Ni in an amount in the range of from 5 to 95 weight-%, more preferably of from 10 to 90 weight-%, more preferably of from 20 to 80 weight-%, more preferably from 30 to 70 weight-%, more preferably from 35 to 65 weight-%, more preferably from 40 to 60 weight-%, and more preferably from 45 to 55 weight-%, calculated as elemental Ni and based on the total weight of the hydrogenation catalyst.

It is preferred that the hydrogenation catalyst comprises from 0 to 1 weight-%, more preferably from 0 to 0.1 weight-%, more preferably from 0 to 0.01 weight-%, of a metal M, wherein M is selected from the group consisting of Pt, Pd, and a mixture thereof, preferably from the group consisting of Rh, Ir, Pd, Pt, and a mixture of two or more thereof, more preferably from the group consisting of Ru, Os, Rh, Ir, Pd, Pt, and a mixture of two or more thereof.

It is preferred that the hydrogenation catalyst comprises one or more oxides selected from the group consisting of refractory metal oxides and mixtures thereof, more preferably from the group consisting of silica, alumina, magnesia, and mixtures of two or more thereof, wherein more preferably the hydrogenation catalyst comprises silica and/or alumina, preferably silica or silica and alumina, and more preferably silica.

In the case where the hydrogenation catalyst comprises one or more oxides selected from the group consisting of refractory metal oxides and mixtures thereof, it is preferred that the amount of the one or more oxides comprised in the hydrogenation catalyst is in the range of from 5 to 95 weight-%, more preferably in the range of from 8 to 90 weight-%, more preferably in the range of from 10 to 80 weight-%, more preferably in the range of from 13 to 70 weight-%, more preferably in the range of from 15 to 65 weight-%, more preferably in the range of from 18 to 60 weight-%, and more preferably in the range of from 20 to 55 weight-%, calculated as the oxide and based on the total weight of the hydrogenation catalyst.

It is preferred that the hydrogenation catalyst comprises one or more metal oxides selected from the group consisting of oxides of silver, lanthanum, antimony, nickel, bismuth, cadmium, lead, tin, vanadium, calcium, strontium, barium, cobalt, copper, tungsten, zinc, molybdenum, manganese, and iron, including mixed oxides of two or more thereof, wherein the hydrogenation catalyst more preferably comprises a metal oxide of zinc and/or iron, preferably zinc oxide.

It is preferred that the pore volume of the hydrogenation catalyst is in the range of from 0.1 to 1.5 ml/g, more preferably from 0.2 to 1.2 ml/g, more preferably from 0.3 to 1 ml/g, more preferably from 0.4 to 0.8 ml/g, more preferably from 0.5 to 0.7 ml/g, and more preferably from 0.55 to 0.6 ml/g, wherein the pore volume is preferably determined according to ISO 15901-3:2007.

It is preferred that the average pore diameter of the hydrogenation catalyst is in the range of from 10 to 500 angstrom, more preferably in the range of from 30 to 400 angstrom, more preferably in the range of from 50 to 300 angstrom, more preferably in the range of from 60 to 250 angstrom, more preferably in the range of from 70 to 200 angstrom, more preferably in the range of from 80 to 150 angstrom, more preferably in the range of from 90 to 120 angstrom, and more preferably in the range of from 95 to 105 angstrom, wherein the average pore diameter is preferably determined according to ISO 15901-1:2016.

It is preferred that the BET surface area of the hydrogenation catalyst is in the range of from 100 to 600 m²/g, more preferably in the range of from 120 to 500 m²/g, more preferably in the range of from 140 to 450 m²/g, more preferably in the range of from 160 to 400 m²/g, more preferably in the range of from 180 to 350 m²/g, more preferably in the range of from 200 to 300 m²/g, more preferably in the range of from 220 to 280 m²/g, and more preferably in the range of from 240 to 260 m²/g, wherein the BET surface area is preferably determined according to ISO 9277:2010.

It is preferred that the average particle size D50 by volume of the hydrogenation catalyst is in the range of from 1 to 50 micrometer, more preferably in the range of from 3 to 25 micrometer, more preferably in the range of from 4 to 15 micrometer, more preferably in the range of from 5 to 10 micrometer, more preferably in the range of from 6 to 8 micrometer, and more preferably in the range of from 6.5 to 7 micrometer, wherein the average particle size D50 by volume is preferably determined according to ISO 13320:2009.

It is preferred that the hydrogenation catalyst is prepared according to Reference Example 1.

It is preferred that the packaged hydrogenation catalyst is contained in a transport container for transport and handling of the packaged hydrogenation catalyst,
wherein the packaged hydrogenation catalyst is enclosed within the transport container,
wherein the transport container is preferably sealed shut in a gas-tight manner.

It is preferred that the transport container has the form of a bag, preferably a ziplock bag, a foil, a film, an envelope, a wrapper, a shell, a mantle, a box, a case, a canister or a vessel.

Further, the present invention relates to a process for preparing a packaged hydrogenation catalyst, preferably for preparing a packaged hydrogenation catalyst according to any one of the embodiments disclosed herein, the process comprising
(i) providing a packaging, wherein the packaging material comprises a polymer comprising from 60 to 100 weight-% of styrene repeating units;
(ii) providing a hydrogenation catalyst, wherein the hydrogenation catalyst comprises Ni;
(iii) filling the hydrogenation catalyst according to (ii) into the packaging according to (i);
(iv) sealing the filled packaging obtained in (iii) shut in a gas-tight manner to obtain a packaged hydrogenation catalyst,
wherein a weight ratio of the hydrogenation catalyst provided in (ii), calculated as total weight of the hydrogenation catalyst, to the polymer comprised in the packaging material provided in (i), calculated as total weight of the polymer, is in the range of from 50,000:1 to 1:1.

It is preferred that the weight ratio of the hydrogenation catalyst provided in (ii), calculated as total weight of the hydrogenation catalyst, to the polymer comprised in the packaging material provided in (i), calculated as total weight of the polymer, is in the range of from 50,000:1 to 1:1, more preferably in the range of from 10,000:1 to 1:1, more preferably in the range of from 5,000:1 to 1:1, more preferably in the range of from 2,000:1 to 1:1, more preferably in the range of from 1,000:1 to 1:1, more preferably in the range of from 250:1 to 1:1 preferably in the range of from 150:1 to 1:1, more preferably in the range of from 100:1 to 1:1, more preferably in the range of from 10.0:1.0 to 1.0:1.0.

It is preferred that the weight ratio of the hydrogenation catalyst provided in (ii), calculated as total weight of the hydrogenation catalyst, to the polymer comprised in the packaging material provided in (i), calculated as total weight of the polymer, is in the range of from 50,000:1 to 1:1, more preferably in the range of from 10,000:1 to 10:1, more preferably in the range of from 5,000:1 to 20:1, more preferably in the range of from 2,000:1 to 50:1, more preferably in the range of from 1,000:1 to 100:1, more preferably in the range of from 500:1 to 150:1, preferably in the range of from 400:1 to 180:1, more preferably in the range of from 300:1 to 200:1, more preferably in the range of from 275:1 to 225:1.

It is preferred that the polymer comprised in the packaging material provided in (i) has a solubility of at least 1 g/l, more preferably in the range of from 1 to 100 g/l, more preferably in the range of from 1.25 to 75 g/l, more preferably in the range of from 1.5 to 50 g/l, more preferably in the range of from 1.75 to 35 g/l, more preferably in the range of from 2 to 20 g/l, in toluene, wherein the solubility of the polymer comprised in the packaging material provided in (i) is determined in toluene having a temperature of 25 °C, wherein the solubility of the polymer is preferably determined in toluene under a pressure of 101.3 kPa (1.013 bar), wherein the solubility is preferably determined according to Reference Example 8.

It is preferred that the polymer comprised in the packaging material provided in (i) comprises from 60 to 95 weight-%, more preferably from 63 to 80 weight-%, more preferably from 65 to 75 weight-%, of styrene repeating units.

It is preferred that the polymer comprised in the packaging material provided in (i) is an alternating copolymer, a random copolymer, a block copolymer, or a graft copolymer.

It is preferred that the polymer comprised in the packaging material provided in (i) comprises, preferably consist of, one or more polystyrenes and styrene-butadiene copolymers, preferably one or more styrene-butadiene copolymers.

In the case where the polymer comprised in the packaging material provided in (i) comprises, preferably consist of, one or more polystyrenes and styrene-butadiene copolymers, it is preferred that the polystyrenes are biaxially oriented polystyrenes.

Further in the case where the polymer comprised in the packaging material provided in (i) comprises, preferably consist of, one or more polystyrenes and styrene-butadiene copolymers, it is preferred that the polymer comprised in the packaging material provided in (i) comprises a styrene-butadiene copolymer, wherein the styrene-butadiene copolymers comprises, preferably consists of, an alternating styrene-butadiene copolymer, a random styrene-butadiene copolymer, a styrene-butadiene block copolymer, or a styrene-butadiene graft copolymer, preferably a styrene-butadiene block copolymer.

Further in the case where the polymer comprised in the packaging material provided in (i) comprises, preferably consist of, one or more polystyrenes and styrene-butadiene copolymers, it is preferred that the polymer comprised in the packaging material comprises a styrene-butadiene copolymer, wherein the styrene-butadiene copolymer comprises from 5 to 40 weight-%, more preferably from 20 to 37 weight-%, more preferably from 25 to 35 weight-%, of butadiene repeating units.

It is preferred that the packaging material provided in (i) further comprises one or more polybutadienes, polyesters, and polyethers, wherein the polyesters more preferably comprise an aromatic copolyester, more preferably an amorphous polyethylene terephthalate.

It is preferred that the packaging material according to (i) comprises from 0 to 1 weight-%, more preferably from 0 to 0.1 weight-%, of one or more of polyethylene and polypropylene, preferably of polyethylene and polypropylene.

It is preferred that the polymer comprised in the packaging material according to (i) has an average molecular weight in the range of from 40 000 to 500 000 Daltons, more preferably in the range of from 50 000 to 400 000 Daltons, more preferably in the range of from 55 000 to 350 000 Daltons, wherein the average molecular weight is preferably determined according to Gel Permeation Chromatography.

It is preferred that in (i) the polymer is provided in an amount in the range of from 1 to 50 g, more preferably in the range of from 2 to 35 g, more preferably in the range of from 5 to 15 g.

It is preferred that the packaging material comprises the polymer in an amount ranging from 50 to 100 wt.-% based on the total weight of the packaging material, more preferably from 70 to 100 wt.-%, more preferably from 80 to 100 wt.-%, more preferably from 90 to 100 wt.-%, more preferably from 95 to 100 wt.-%, more preferably from 98 to 100 wt.-%, more preferably from 99 to 100 wt.-%, and more preferably from 99.9 to 100 wt.-% based on the total weight of the packaging material.

It is preferred that in (i) to the packaging is in the form of a bag, preferably a ziplock bag, a foil, a film, an envelope, a wrapper, a shell, or a mantle.

It is preferred that (i) further comprises
(i.a) forming the polymer to a film F₁,
   wherein F₁ is preferably as defined in any one of the embodiments disclosed herein, and
   wherein (iii) comprises enclosing the hydrogenation catalyst according to (ii) with F₁ comprising, preferably consisting of, the polymer according to (i) in a gas atmosphere to obtain a pre-packaging comprising the hydrogenation catalyst,
      or
(i.a') forming the polymer to a film F₁ and a film F₂, wherein F₁ and F₂ independently from one another is preferably as defined in any one of the embodiments disclosed herein, and
   wherein (iii) comprises enclosing the hydrogenation catalyst according to (ii) with F₁ and F₂ in a gas atmosphere to obtain a pre-packaging comprising the hydrogenation catalyst,
   wherein F₁ and F₂ independently from one another comprises, preferably consists of, the polymer according to (i).

In the case where (i) further comprises (i.a), it is preferred that (i) further comprises after (i.a) (i.b) folding F₁ at least over its length or over its width to form a pre-packaging.

In the case where (i) further comprises (i.a'), it is preferred that (i) further comprises after (i.a')
(i.c) placing F₁ planar on F₂, and
(i.d) sealing F₁ with F₂ to form an open packaging.

In the case where (i) further comprises (i.a) or (i.a'), it is preferred that the film F₁ and optionally the film F₂ independently from one another has a quadratic geometry, preferably having a length in the range of from 5 to 550 mm, more preferably in the range of from 65 to 450 mm, more preferably in the range of from 130 to 300 mm, more preferably in the range of from 200 to 250 mm.

Further in the case where (i) further comprises (i.a) or (i.a'), it is preferred that the film F₁ and optionally the film F₂ independently from one another has a rectangular geometry, preferably having a length in the range of from 5 to 550 mm, more preferably in the range of from 65 to 450 mm, more preferably in the range of from 130 to 300 mm, more preferably in the range of from 200 to 250 mm, and a width in the range of from 5 to 650 mm, preferably in the range of from 65 to 550 mm, more preferably in the range of from 150 to 400 mm, more preferably in the range of from 210 to 260 mm.

Further in the case where (i) further comprises (i.a) or (i.a'), it is preferred that the film F₁ according to any one of the embodiments disclosed herein, more preferably one of the films F₁ and F₂ according to any one of the embodiments disclosed herein, more preferably each of the films F₁ and F₂ according to any one of the embodiments disclosed herein, has a rectangular, quadratic, triangular, circular, or trapezoidal geometry.

It is preferred that in (ii) the hydrogenation catalyst is provided in an amount in the range of from 5 to 6000 g, more preferably in the range of from 100 to 5500 g, more preferably in the range of from 4700 to 5300 g.

It is preferred that sealing in (iii) is performed in a gas atmosphere, wherein the gas atmosphere comprises, preferably consists of, one or more inert gases, more preferably one or more of nitrogen and argon.

It is preferred that the process further comprises after (iii) and prior to (iv)
(iii.1) applying a vacuum to the interior volume of the filled packaging, preferably a vacuum in the range of from 0 to 10 hPa, more preferably in the range of from 0 to 1 hPa.

It is preferred that sealing according to (iv) is performed by welding of the filled packaging at a temperature in the range of from 160 to 190 °C, more preferably in the range of from 170 to 180 °C.

It is preferred that the process further comprises
(v) providing a transport container;
(vi) filling the packaged hydrogenation catalyst obtained in (iv) into the transport container according to (v);
(vii) sealing the filled transport container obtained in (vi) shut, preferably in a gas-tight manner.

In the case where the process further comprises (v), (vi), and (vii), it is preferred that the transport container has the form of a bag, preferably a ziplock bag, a foil, a film, an envelope, a wrapper, a shell, a mantle, a box, a case, a canister or a vessel.

Yet further, the present invention relates to a packaged hydrogenation catalyst, obtainable or obtained by a process according to any one of the embodiments disclosed herein.

Yet further, the present invention relates to a process for the conversion, preferably for one or more of a hydrogenation, a dearomatization, and a desulfurization, of one or more unsaturated compounds, comprising
(A) providing one or more unsaturated compounds and a packaged hydrogenation catalyst according to any one of embodiments 1 to 73 and 102, in a reaction zone; and
(B) contacting one or more of the one or more unsaturated compounds provided in (A) and the packaged hydrogenation catalyst according to any one of embodiments 1 to 73 and 102 provided in (A) with hydrogen at a temperature comprised in the range of from 100 to 400 °C.

It is preferred that the one or more unsaturated compounds provided in (A) comprise one or more alkanes, more preferably one or more C5 to C17 alkanes, more preferably one or more C5 to C15 alkanes, more preferably one or more C5 to C13 alkanes, more preferably one or more C5 to C11 alkanes, more preferably one or more C5 to C9 alkanes, more preferably one or more C5 and/or C9 alkanes, and more preferably one or more C9 alkanes.

It is preferred that the one or more unsaturated compounds provided in (A) comprise one or more compounds selected from the group consisting of C5 resins, C9 resins, C5/C9 copolymer resins, dicyclopentadiene resins, and mixtures of two or more thereof, more preferably from the group consisting of C5 resins, C9 resins, C5/C9 copolymer resins, and mixtures of two or more thereof, more preferably from the group consisting of C5 resins, C9 resins, and mixtures of two or more thereof, wherein more preferably the one or more unsaturated compounds comprise C9 resins, wherein more preferably the one or more unsaturated compounds consist of C5 and/or C9 resins, preferably of C9 resins.

It is preferred that the one or more unsaturated compounds provided in (A) comprise 800 wppm or less of sulfur, calculated as the element, more preferably from 500 wppm or less, more preferably 300 wppm or less, more preferably 200 wppm or less, more preferably 150 wppm or less, more preferably 100 wppm or less, more preferably 60 wppm or less, more preferably 20 wppm or less, more preferably 10 wppm or less, and more preferably 5 wppm or less.

It is preferred that contacting in (B) is conducted at a temperature in the range of from 150 to 350°C, more preferably in the range of from 200 to 320°C, more preferably in the range of from 230 to 300°C, more preferably in the range of from 250 to 290°C, more preferably in the range of from 260 to 280°C, more preferably in the range of from 265 to 275°C.

It is preferred that contacting in (B) is conducted for a duration in the range of from 0.1 to 10 h, more preferably in the range of from 0.5 to 5 h , more preferably in the range of from 1 to 3 h, more preferably in the range of from 1.5 to 2.5 h, more preferably in the range of from 1.8 to 2.2 h.

It is preferred that contacting in (B) is conducted at a pressure in the range of from 5 to 200 bar, more preferably in the range of from 10 to 150 bar, more preferably in the range of from 30 to 120 bar, more preferably in the range of from 50 to 100 bar, more preferably in the range of from 70 to 90 bar, more preferably in the range of from 75 to 85 bar.

It is preferred that contacting in (B) is conducted under agitation, wherein the agitation is more preferably achieved by stirring.

It is preferred that the reaction zone in (A) contains 0.01 to 5 weight-%, more preferably 0.05 to 3 weight-%, more preferably 0.1 to 2.5 weight-%, more preferably 0.3 to 2.1 weight-%, more preferably 0.5 to 1.8 weight-%, more preferably 0.7 to 1.5 weight-%, more preferably 0.8 to 1.3 weight-%, more preferably of from 0.9 to 1.1 weight-%, of the hydrogenation catalyst comprised in the packaged hydrogenation catalyst, based on 100 weight-% of the one or more unsaturated compounds.

It is preferred that the process for the conversion is a continuous process or a batch process, wherein preferably contacting in (B) is conducted under continuous and/or batch conditions, preferably under batch conditions.

Yet further, the present invention relates to a use of a packaged hydrogenation catalyst according to any one of the embodiments disclosed herein in one or more of a dearomatization, a desulfurization, preferably a desulfurization of petrochemical feedstocks, and a hydrogenation, preferably in a hydrogenation of one or more unsaturated compounds, preferably of unsaturated polymer compounds, more preferably of petrochemical resins or petrochemical feedstocks, more preferably of one or more unsaturated compounds selected from the group consisting of C5 resins, C9 resins, C5/C9 copolymer resins, dicyclopentadiene resins, and mixtures of two or more thereof, preferably from the group consisting of C5 resins, C9 resins, C5/C9 copolymer resins, and mixtures of two or more thereof, more preferably from the group consisting of C5 resins, C9 resins, and mixtures of two or more thereof, wherein more preferably the one or more unsaturated compounds comprise C9 resins, wherein more preferably the one or more unsaturated compounds consist of C5 and/or C9 resins, preferably of C9 resins.

In the context of the present invention, the definition of a packaging as being sealed shut "in a gas-tight manner" specifies that no gas is allowed to pass in or out of the packaging.

In the context of the present invention, the definition of a packaging as being "vacuum-sealed" specifies that the contents within the packaging are placed under vacuum for evacuating any gases from within the packaging prior to the sealing shut of the packaging.

The present invention is further illustrated by the following set of embodiments and combinations of embodiments resulting from the dependencies and back-references as indicated. In particular, it is noted that in each instance where a range of embodiments is mentioned, for example in the context of a term such as "The packaged hydrogenation catalyst according to any one of embodiments 1 to 4", every embodiment in this range is meant to be explicitly disclosed for the skilled person, i.e. the wording of this term is to be understood by the skilled person as being synonymous to "The packaged hydrogenation catalyst according to any one of embodiments 1, 2, 3, and 4".

The present invention is further illustrated by the following reference examples, examples, and comparative examples.

### EXAMPLES

### Reference Example 1: Provision of a hydrogenation catalyst

A hydrogenation catalyst was prepared according to Example 2 of WO 2015/008247 A2 with slight modifications. Solutions containing nickel and alumina salts, silicate, and sodium carbonate were mixed in a well stirred precipitation vessel at a temperature of 90 °C. The pH of the slurry formed was about 7.5 and after 1 hour the precipitation was completed. After washing the precipitate, the precursor of the catalyst was filtered and dried in an oven at 110 °C. The dried solid material was then activated with hydrogen at 425 °C for two hours and subsequently passivated in the presence of air at 100 °C.

Said hydrogenation catalyst was reduced with hydrogen, followed by stabilization. During stabilization the reduced hydrogenation catalyst was treated with CO₂ and traces of oxygen (4 % O₂) to passivate the active metallic Ni. The process was controlled by temperature and gas volumes and concentrations.

Hazard properties of said hydrogenation catalyst include H251: self-heating, may catch fire and H350i: may cause cancer by inhalation (see Hazard and Precautionary statements of the Globally Harmonized System of Classification and Labelling of Chemicals).

### Reference Example 2: Polystyrene as polymer for packaging

A polystyrene film was provided (Norflex^{®}) having a thickness of 50 micrometer and a transparent (clear) appearance. The polymer was a biaxially oriented polystyrene and the film was manufactured without addition of any fillers or softeners. Further, the polystyrene film was physiologically harmless.

The technical characteristics of the film are provided in table 1 below.

**Table 1**

| **Characteristics of the polystyrene film of Reference Example 2.** | | |
|---|---|---|
| Total thickness | 50.0 (± 10 %) micrometer | |
| Weight of surface | 52.5 (± 10 %) g/m² | |
| Density | 1.05 g/cm³ | |
| | | |
| | longitudinal | transverse |
| Tensile strength (ISO 527-3:2018) | equal to or greater than 39.2 N/mm² | equal to or greater than 39.2 N/mm² |
| Elongation at tear (ISO 527-3:2018) | equal to or greater than 3.1 % | equal to or greater than 3.1 % |
| Edge strength | equal to or greater than 25.0 N | equal to or greater than 25.0 N |

### Reference Example 3: Polystyrene as polymer for packaging

A polystyrene film was provided (Norflex^{®}) having a thickness of 100 micrometer and a transparent (clear) appearance. The polymer was a biaxially oriented polystyrene and the film manufactured without addition of any fillers or softeners. Further, the polystyrene film was physiologically harmless.

The technical characteristics of the film are provided in table 2 below.

**Table 2**

| **Characteristics of the polystyrene film of Reference Example 3.** | | |
|---|---|---|
| Total thickness | 100.0 (± 10 %) micrometer | |
| Weight of surface | 105.0 (± 10 %) g/m² | |
| Density | 1.05 g/cm³ | |
| | | |
| | longitudinal | transverse |
| Tensile strength (ISO 527-3:2018) | equal to or greater than 39.2 N/mm² | equal to or greater than 39.2 N/mm² |
| Elongation at tear (ISO 527-3:2018) | equal to or greater than 3.1 % | equal to or greater than 3.1 % |
| Edge strength | equal to or greater than 30.0 N | equal to or greater than 30.0 N |

### Reference Example 4: Styrene-butadiene copolymer (SBC) as polymer for packaging

A styrene-butadiene copolymer (SBC) film was provided (Styroflex^{®} 2G66 SBC; INEOS Styrolution) having a thickness of 50 micrometer and a transparent (clear) appearance. The film was a styrene-butadiene copolymer (SBC) comprising 35 weight-% of butadiene repeating units and 65 weight-% of styrene repeating units. The technical characteristics of the film are provided in table 3 below.

**Table 3**

| **Characteristics of the styrene-butadiene copolymer (SBC) film of Reference Example 4.** | | |
|---|---|---|
| Total thickness | 50 micrometer | |
| Density | 1000 kg/m³ | ISO 1183 |
| Melt volume flow rate (MVR; 200 °C, 5 kg) | 14 cm³/10 min | ISO 1133 |
| Tensile Modulus | 120 MPa | ISO 527-3:2018 |
| Elongation at break | greater than 650 % | ISO 527-3:2018 |
| Tensile stress at break | 33 MPa | |
| Shore hardness on scale A | 84 | |
| Shore hardness on scale D | 29 | |
| Vicat A (softening temperature) | 35 °C | |
| Refractive Index (Sodium D Line) | 1.565 | |
| Yield stress | 4 MPa | ISO 527-3:2018 |
| Yield strain | 5% | ISO 527-3:2018 |
| Nominal strain at break | greater than 50 % | ISO 527-3:2018 |
| Charpy impact strength (+23°C) | no break | ISO 179/1eU |
| Charpy impact strength (-30 °C) | no break | ISO 179/1eU |
| Charpy notched impact strength (23 °C) | no break | ISO 179/1eA |
| Volume resistivity | greater than 1·10¹³ | IEC 62631-2-1 |
| | Ohm·m | |
| Surface resistivity | 1·10¹⁵ Ohm | IEC 62631-2-1 |
| Water absorption | 0.07 % | |
| Humidity absorption | 0.07 % | |
| Elmendorf tear resistance (parallel) | 650 N | ISO 6383-2 |
| Elmendorf tear resistance (normal) | 800 N | ISO 6383-2 |
| Water vapor transmission rate (23 °C, 85 % relative humidity) | 0.27 g/(m²·d) | ISO 15106-1/-2 |
| Oxygen transmission rate (23 °C, 0 % relative humidity) | 27.2 cm³/(m²·d·bar) | ISO 15106-1/-2 |

### Reference Example 5: Styrene-butadiene copolymer (SBC) as polymer for packaging

A styrene-butadiene copolymer (SBC) film was provided (Styroflex^{®} 4G80 SBC; INEOS Styrolution) having a thickness of 50 micrometer and a clear (transparent) appearance. The film was a styrene-butadiene copolymer (SBC) comprising 35 weight-% of butadiene repeating units and 65 weight-% of styrene repeating units. The technical characteristics of the film are provided in table 4 below.

**Table 4**

| **Characteristics of the styrene-butadiene copolymer (SBC) of Reference Example 5.** | | |
|---|---|---|
| Total thickness | 50 micrometer | |
| Density | 980 kg/m³ | ISO 1183 |
| Melt volume flow rate (MVR; 200 °C, 5 kg) | 18 cm³/10 min | ISO 1133 |
| Tensile Modulus | 50 MPa | ISO 527-3:2018 |
| Elongation at break | 500 % | ISO 527-3:2018 |
| Shore hardness on scale A | 80 | ISO 7619-1 |
| Shore hardness on scale D | 28 | ISO 7619-1 |
| Vicat A (softening temperature) | 38 °C | ISO 306 |
| Refractive Index | 1.56 | ASTM D 1525 |
| Charpy notched impact strength (+23 °C) | 80 kJ/m² | ISO 179/1eA |
| Charpy notched impact strength | 80 kJ/m² | ISO 179/1eA |
| (-30 °C) | | |
| Water absorption | 0.07 % | |
| Humidity absorption | 0.07 % | |

### Reference Example 6: Styrene-butadiene copolymer (SBC) as polymer for packaging

A styrene-butadiene copolymer (SBC) film was provided (Styrolux^{®} 3G55 SBC; INEOS Styrolution) having a thickness of 50 micrometer and a clear (transparent) appearance. The film was a styrene-butadiene copolymer (SBC) comprising 26 weight-% of butadiene repeating units and 74 weight-% of styrene repeating units. The technical characteristics of the film are provided in table 5 below.

**Table 5**

| **Characteristics of the styrene-butadiene copolymer (SBC) of Reference Example 6.** | | |
|---|---|---|
| Total thickness | 50 micrometer | |
| Density | 1010 kg/m³ | ISO 1183 |
| Melt volume flow rate (MVR; 200 °C, 5 kg) | 14 cm³/10 min | ISO 1133 |
| Tensile Modulus | 900 MPa | ISO 527-3:2018 |
| Yield stress | 15 MPa | ISO 527-3:2018 |
| Yield strain | 2% | ISO 527-3:2018 |
| Nominal strain at break | greater than 50 % | ISO 527-3:2018 |
| Charpy impact strength (+23 °C) | no break | ISO 179/1eU |
| Charpy notched impact strength (+23 °C) | 85 kJ/m² | ISO 179/1eA |
| | | |
| Temperature of deflection under load (1.80 MPa) | 51 °C | ISO 75-1/-2 |
| Temperature of deflection under load (0.45 MPa) | 62 °C | ISO 75-1/-2 |
| Vicat B (softening temperature) | 35 °C | ISO 306 |
| Coefficient of linear thermal expansion (parallel) | 75·10⁻⁶/K | ISO 11359-1/-2 |
| Volume resistivity | greater than 1·10¹³ Ohm·m | IEC 62631-3-1 |
| Surface resistivity | greater than 1·10¹⁵ Ohm | IEC 62631-3-2 |
| Water absorption | 0.07 % | |
| Humidity absorption | 0.07 % | |

### Reference Example 7: Mixture of polyethylene and polyamide as polymer for packaging

A mixture of polyethylene and polyamide was provided as film produced by co-extrusion of 0.050 mm PE-LD (low density polyethylene), 0.03 mm polyamide and 0.05 mm PE-LD (low density polyethylene).

The technical characteristics of the film are provided in table 6 below.

**Table 6**

| **Characteristics of the polyethylene and polyamide film of Reference Example 7.** | | |
|---|---|---|
| | longitudinal | transverse |
| Tensile strength (ISO 527-3:2018) | equal or greater than 45 N/mm² | equal or greater than 30 N/mm² |
| Elongation at tear (ISO 527-3:2018) | equal or greater than 400 % | equal or greater than 400 % |
| Area related oxygen permeability (DIN 53380-3:1998-07 at 23°C and 75% relative humidity) | equal or smaller than 65 cm³/(m²·d·bar)* | |

| | | |
|---|---|---|
| * The unit bar refers to a pressure wherein 1 bar equals 10⁵ Pa. | | |

### Reference Example 8: Solubility test

The solubility of a styrene-butadiene copolymer was tested in different solvent systems. The results are shown in table 7 below. The solubility tests were performed with 0.1 g of the styrene-butadiene copolymer provided as film and with 50 ml of a solvent system. The solubility was tested in the solvent system having a temperature of 25 °C and under an atmosphere of air at a pressure of 101.3 kPa (1013 mbar).

**Table 7**

| **Solubility of a styrene-butadiene copolymer in different solvents.** | | |
|---|---|---|
| Solvent system | Aspect of solution at 25 °C | Result |
| Cyclohexane | clear | suitable |
| Toluene | clear | suitable |
| Xylene | clear | suitable |

### Reference Example 9: Catalytic testing

Resin hydrogenation tests were performed in the presence of the polymers provided in Reference Examples 2 to 6, and also in the absence of a polymer (Comparative Example 1). The hydrogenation catalyst according to Reference Example 1 was used. The hydrogenation tests were performed according to the following procedure. During the hydrogenation a weight ratio of hydrogenation catalyst to polymer of 10:1 was used.

Hydrogenation tests were performed in a batch type reactor HP-9 using a high Sulphur C9-resin as feed (Sulphur content was 125 ppm). The activity of the samples was compared against a commercially available hydrogenation catalyst (Ni 5338 P RS catalyst from BASF; 62 % Ni powder catalyst designed for the hydrogenation of C9 and DCPD petroleum resins. The catalyst is sold in reduced-CO₂ stabilized form). The conditions for a standard test were:
agitation: 1100 rpm;
pressure: 80 bar;
temperature: 270 °C;
feed: 75 g resin / 75 g Exxsol D40;
runtime: 2 hours;
catalyst loading: 1.0 % on dry resin base.

The reaction rate of the catalyst hydrogenating the hydrocarbon resin (RRH) is expressed by the reaction rate constant, which is obtained from performing a linear regression between 0% and 30% conversion, and is expressed in 1/ h after 2 hours of hydrogenation. The hydrogenation activity was calculated by normalizing RRH of catalysts by RRH of Example 1.

The results of the catalytic testing are noted in table 8 below.

**Table 8**

| **Results of the hydrogenation tests in the presence of a polymer according to Reference Examples 2 to 7 and in the absence of a polymer (Comparative Example 1).** | | | | | | |
|---|---|---|---|---|---|---|
| # | Polymer | Catalyst loading [weight-%*] | Polymer loading [weight-%*] | Relative activity, k (0-30%) [%] | Relative activity, k (30-70%) [%] | H₂ uptake [%] |
| Comparative Ex. 1 | none | 1 | 0 | 100 | 100 | 74 |
| Ex. 1 | according to Ref. Ex. 2 | 1 | 1 | 90 | 86 | 71 |
| Ex. 2 | according to Ref. Ex. 3 | 1 | 0.1 | 106 | 103 | 74 |
| Ex. 3 | according to Ref. Ex. 4 | 1 | 0.1 | 102 | 93 | 73 |
| Ex. 4 | according to Ref. Ex. 5 | 1 | 0.1 | 104 | 94 | 73 |
| Ex. 5 | according to Ref. Ex. 6 | 1 | 0.1 | 97 | 93 | 72 |

| | | | | | | |
|---|---|---|---|---|---|---|
| *based on the weight of the resin | | | | | | |

The resin hydrogenation test performed in the absence of a polymer as noted as Comparative Example served as a benchmark. Thus, the relative activity k (0-30%) as well as k (30-70%) was set to 100 % for the resin hydrogenation test in the absence of a polymer, allowing a comparison with the other tests.

It can be seen from the results shown in table 8 that the presence of a polymer according to one of Reference Examples 2 to 6 does not adversely affect the resin hydrogenation. In particular comparing the results for resin hydrogenation tests in the presence of a polymer according to one of Reference Examples 2 to 6 with the test in the absence of a polymer, it can be seen that the relative activity k (0-30%) as well as k (30-70%) is almost the same.

Considering that for future applications a weight ratio of catalyst to polymer is envisaged to be in the range of from 250:1 to 100:1 in a resin hydrogenation reaction, it can be expected that the catalytic activity will be approximately the same for resin hydrogenation reactions in the absence of a polymer as in the presence of a polymer.

### Example 6: Packaging of a hydrogenation catalyst

A catalytic material comprising Ni in accordance with Reference Example 1 was provided. Further, two polystyrene films according to Reference Example 2 were provided, wherein each film had a length and a width of 7 cm. Said films were set planar on top of each other and then sealed along three sides to form an open bag. The open bag was filled with 0.75 g of said catalyst. Then, the bag was fully sealed. Sealing was performed with the edge of a metal plate having a temperature of 175 °C. The weight ratio of catalyst to polymer was 1:1. A packaged hydrogenation catalyst was obtained.

### Reference Example 10: Catalytic testing

The catalytic testing according to Reference Example 9 was repeated using different catalysts. A packaged hydrogenation catalyst according to Example 6 was used or a hydrogenation catalyst according to Reference Example 1.

A catalyst was added to the batch reactor with resin pre-dissolved in a non-polar organic solvent system (Exxsol D-40) at approximately 95 °C. It was particularly observed that after hydrogenation, the polystyrene was completely dissolved in the mixture comprising resin and solvent.

It was found that the hydrogenation activity of the hydrogenation catalyst packaged in a polystyrene bag slightly dropped to 90 % in comparison to the hydrogenation activity of the hydrogenation catalyst provided as such.

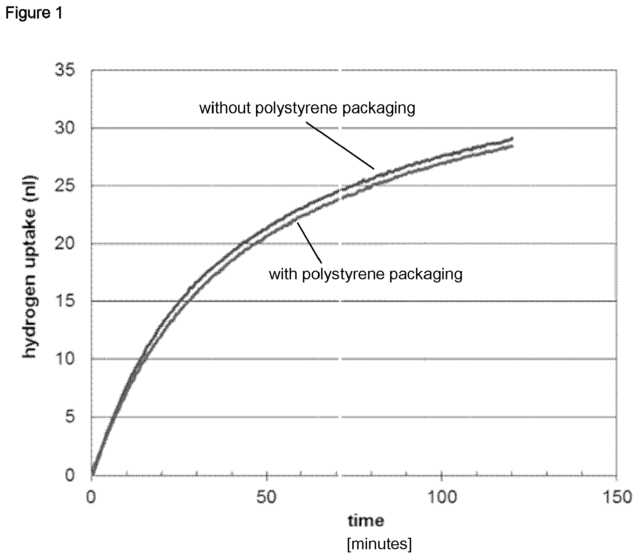

Further, the hydrogen uptake was monitored for the hydrogenation tests. The results are shown in Figure 1. It can be seen that the hydrogen uptake of the catalyst provided in a sealed bag (lower line) was slightly lower than that of the catalyst provided as such (upper line), thus, in the absence of polystyrene. It was shown that a packaged hydrogenation catalyst shows comparable performance in a hydrogenation reaction as a hydrogenation catalyst provided as such.

### Brief description of figures:

- Figure 1:: shows on the ordinate the hydrogen uptake in normal liters (nl) of the catalytic material in the hydrogenation test according to Reference Example 10. The time is shown on the abscissa in minutes.

### Cited literature

- WO 2015/008247 A2
- WO 2017/208164 A1
- WO 2008/110020A1

## Claims

1. A packaged hydrogenation catalyst comprising a packaging and a hydrogenation catalyst, wherein the hydrogenation catalyst is enclosed within the packaging,
wherein the hydrogenation catalyst comprises Ni,
wherein the packaging is sealed shut in a gas-tight manner,
wherein the packaging material comprises a polymer,
wherein the polymer comprises from 60 to 100 weight-% of styrene repeating units, and
wherein a weight ratio of the hydrogenation catalyst, calculated as total weight of the hydrogenation catalyst, to the polymer, calculated as total weight of the polymer, is in the range of from 50,000:1 to 1:1.

2. The packaged hydrogenation catalyst according to claim 1, wherein the polymer comprised in the packaging material has a solubility of at least 1 g/l, wherein the solubility of the polymer comprised in the packaging material is determined in toluene having a temperature of 25 °C.

3. The packaged hydrogenation catalyst according to claim 1 or 2, wherein the polymer comprised in the packaging material comprises one or more polystyrenes and styrene-butadiene copolymers.

4. The packaged hydrogenation catalyst according to any one of claims 1 to 3, wherein the polymer comprised in the packaging material comprises a styrene-butadiene copolymer, wherein the styrene-butadiene copolymer comprises from 5 to 40 weight-% of butadiene repeating units.

5. The packaged hydrogenation catalyst according to any one of claims 1 to 4, wherein the packaging material comprises from 0 to 1 weight-% of one or more of polyethylene and polypropylene.

6. The packaged hydrogenation catalyst according to any one of claims 1 to 5, wherein the packaging has the form of a bag, a foil, a film, an envelope, a wrapper, a shell, or a mantle.

7. The packaged hydrogenation catalyst according to any one of claims 1 to 6, wherein the packaging comprises a film F₁ and optionally a film F₂, wherein F₁ comprises the polymer as defined in any one of claims 1 to 4.

8. The packaged hydrogenation catalyst according to claim 7, wherein the film F₁ has a surface weight in the range of from 20 to 150 g/m².

9. The packaged hydrogenation catalyst according to claim 7 or 8, wherein the film F₁ has a thickness in the range of from 10 to 150 micrometer.

10. The packaged hydrogenation catalyst according to any one of claims 1 to 9, wherein the hydrogenation catalyst is in the form of one or more of a powder, granules, flakes, and pellets.

11. The packaged hydrogenation catalyst according to any one of claims 1 to 10, wherein the packaged hydrogenation catalyst is contained in a transport container for transport and handling of the packaged hydrogenation catalyst,
wherein the packaged hydrogenation catalyst is enclosed within the transport container.

12. A process for preparing a packaged hydrogenation catalyst, the process comprising
(i) providing a packaging, wherein the packaging material comprises a polymer comprising from 60 to 100 weight-% of styrene repeating units;
(ii) providing a hydrogenation catalyst, wherein the hydrogenation catalyst comprises Ni;
(iii) filling the hydrogenation catalyst according to (ii) into the packaging according to (i);
(iv) sealing the filled packaging obtained in (iii) shut in a gas-tight manner to obtain a packaged hydrogenation catalyst,
wherein a weight ratio of the hydrogenation catalyst provided in (ii), calculated as total weight of the hydrogenation catalyst, to the polymer comprised in the packaging material provided in (i), calculated as total weight of the polymer, is in the range of from 50,000:1 to 1:1.

13. A packaged hydrogenation catalyst, obtainable or obtained by a process according to claim 12.

14. A process for the conversion of one or more unsaturated compounds, comprising
(A) providing one or more unsaturated compounds and a packaged hydrogenation catalyst according to any one of claims 1 to 11 and 13, in a reaction zone; and
(B) contacting one or more of the one or more unsaturated compounds provided in (A) and the packaged hydrogenation catalyst according to any one of claims 1 to 11 and 13 provided in (A) with hydrogen at a temperature comprised in the range of from 100 to 400 °C.

15. Use of a packaged hydrogenation catalyst according to any one of claims 1 to 11 and 13 in one or more of a dearomatization, a desulfurization, and a hydrogenation,
of one or more unsaturated compounds.

## Patentansprüche

1. Verpackter Hydrierungskatalysator, umfassend eine Verpackung und einen Hydrierungskatalysator,
wobei der Hydrierungskatalysator innerhalb der Verpackung eingeschlossen ist,
wobei der Hydrierungskatalysator Ni umfasst,
wobei die Verpackung auf gasdichte Weise verschlossen ist,
wobei das Verpackungsmaterial ein Polymer umfasst,
wobei das Polymer von 60 bis 100 Gew.-% von Styrol wiederholenden Einheiten umfasst und
wobei ein Gewichtsverhältnis des Hydrierungskatalysators, berechnet als Gesamtgewicht des Hydrierungskatalysators, zu dem Polymer, berechnet als Gesamtgewicht des Polymers, in dem Bereich von 50.000:1 bis 1:1 ist.

2. Verpackter Hydrierungskatalysator nach Anspruch 1, wobei das Polymer, das in dem Verpackungsmaterial umfasst ist, eine Löslichkeit von mindestens 1 g/l hat, wobei die Löslichkeit des Polymers, das in dem Verpackungsmaterial umfasst ist, in Toluol bei einer Temperatur von 25 °C bestimmt wird.

3. Verpackter Hydrierungskatalysator nach Anspruch 1 oder 2, wobei das Polymer, das in dem Verpackungsmaterial umfasst ist, ein oder mehrere Polystyrole und Styrol-Butadien-Copolymere umfasst.

4. Verpackter Hydrierungskatalysator nach einem der Ansprüche 1 bis 3, wobei das Polymer, das in dem Verpackungsmaterial umfasst ist, ein Styrol-Butadien-Copolymer umfasst, wobei das Styrol-Butadien-Copolymer von 5 bis 40 Gew.-% von Butadien wiederholenden Einheiten umfasst.

5. Verpackter Hydrierungskatalysator nach einem der Ansprüche 1 bis 4, wobei das Verpackungsmaterial von 0 bis 1 Gew.-% von einem oder mehreren von Polyethylen und Polypropylen umfasst.

6. Verpackter Hydrierungskatalysator nach einem der Ansprüche 1 bis 5, wobei die Verpackung die Form einer Tüte, einer Folie, eines Films, eines Umschlags, einer Umwicklung, einer Schale oder eines Mantels hat.

7. Verpackter Hydrierungskatalysator nach einem der Ansprüche 1 bis 6, wobei die Verpackung einen Film F₁ und optional einen Film F₂ umfasst, wobei F₁ das in einem der Ansprüche 1 bis 4 definierte Polymer umfasst.

8. Verpackter Hydrierungskatalysator nach Anspruch 7, wobei der Film F₁ ein Oberflächengewicht in dem Bereich von 20 bis 150 g/m² hat.

9. Verpackter Hydrierungskatalysator nach Anspruch 7 oder 8, wobei der Film F₁ eine Dicke in dem Bereich von 10 bis 150 Mikrometern hat.

10. Verpackter Hydrierungskatalysator nach einem der Ansprüche 1 bis 9, wobei der Hydrierungskatalysator in der Form von einem oder mehreren von einem Pulver, Granulat, Flocken und Pellets ist.

11. Verpackter Hydrierungskatalysator nach einem der Ansprüche 1 bis 10, wobei der verpackte Hydrierungskatalysator in einem Transportbehälter zum Transportieren und Handhaben des verpackten Hydrierungskatalysators enthalten ist,
wobei der verpackte Hydrierungskatalysator in dem Transportbehälter eingeschlossen ist.

12. Verfahren zum Herstellen eines verpackten Hydrierungskatalysators, das Verfahren umfassend
(i) Bereitstellen einer Verpackung, wobei das Verpackungsmaterial ein Polymer umfasst, umfassend von 60 bis 100 Gew.-% von Styrol wiederholenden Einheiten umfasst;
(ii) Bereitstellen eines Hydrierungskatalysators, wobei der Hydrierungskatalysator Ni umfasst;
(iii) Einfüllen des Hydrierungskatalysators gemäß (ii) in die Verpackung gemäß (i);
(iv) Versiegeln der gefüllten Verpackung erhalten in (iii), geschlossen in einer gasdichten Weise, um einen verpackten Hydrierungskatalysator zu erhalten,
wobei ein Gewichtsverhältnis des in (ii) bereitgestellten Hydrierungskatalysators, berechnet als Gesamtgewicht des Hydrierungskatalysators, zu dem in dem Polymer, umfasst in dem in (i) bereitgestellten Verpackungsmaterial, berechnet als Gesamtgewicht des Polymers, in dem Bereich von 50.000:1 bis 1:1 ist.

13. Verpackter Hydrierungskatalysator, erhältlich oder erhalten durch ein Verfahren nach Anspruch 12.

14. Verfahren für die Umwandlung einer oder mehrerer ungesättigter Verbindungen, umfassend
(A) Bereitstellen einer oder mehrerer ungesättigter Verbindungen und eines verpackten Hydrierungskatalysators nach einem der Ansprüche 1 bis 11 und 13 in einer Reaktionszone; und
(B) Inkontaktbringen einer oder mehrerer der einen oder mehreren ungesättigten Verbindungen bereitgestellt in (A) und des verpackten Hydrierungskatalysators nach einem der Ansprüche 1 bis 11 und 13 bereitgestellt in (A) mit Wasserstoff bei einer Temperatur, die in dem Bereich von von 100 bis 400 °C umfasst ist.

15. Verwendung eines verpackten Hydrierungskatalysators nach einem der Ansprüche 1 bis 11 und 13 bei einem oder mehreren von einer Dearomatisierung, einer Entschwefelung und einer Hydrierung von einer oder mehreren ungesättigten Verbindungen.

## Revendications

1. Catalyseur d'hydrogénation emballé comprenant un emballage et un catalyseur d'hydrogénation,
dans lequel le catalyseur d'hydrogénation est enfermé à l'intérieur de l'emballage,
dans lequel le catalyseur d'hydrogénation comprend du Ni,
dans lequel l'emballage est hermétiquement scellé d'une manière étanche aux gaz,
dans lequel le matériau d'emballage comprend un polymère,
dans lequel le polymère comprend 60 à 100 % en poids de motifs répétitifs styrène, et
dans lequel le rapport en poids du catalyseur d'hydrogénation, calculé sous la forme du poids total du catalyseur d'hydrogénation, au polymère, calculé sous la forme du poids total du polymère, est situé dans la plage allant de 50 000/1 à 1/1.

2. Catalyseur d'hydrogénation emballé selon la revendication 1, dans lequel le polymère compris dans le matériau d'emballage a une solubilité d'au moins 1 g/l, dans lequel la solubilité du polymère compris dans le matériau d'emballage est déterminée dans du toluène ayant une température de 25°C.

3. Catalyseur d'hydrogénation emballé selon la revendication 1 ou 2, dans lequel le polymère compris dans le matériau d'emballage comprend un ou plusieurs polystyrènes et copolymères de styrène-butadiène.

4. Catalyseur d'hydrogénation emballé selon l'une quelconque des revendications 1 à 3, dans lequel le polymère compris dans le matériau d'emballage comprend un copolymère de styrène-butadiène, dans lequel le copolymère de styrène-butadiène comprend 5 à 40 % en poids de motifs répétitifs butadiène.

5. Catalyseur d'hydrogénation emballé selon l'une quelconque des revendications 1 à 4, dans lequel le matériau d'emballage comprend 0 à 1 % en poids d'un ou plusieurs parmi le polyéthylène et le polypropylène.

6. Catalyseur d'hydrogénation emballé selon l'une quelconque des revendications 1 à 5, dans lequel l'emballage a la forme d'un sac, d'une feuille, d'un film, d'une enveloppe, d'un manchon, d'une coque, ou d'une chemise.

7. Catalyseur d'hydrogénation emballé selon l'une quelconque des revendications 1 à 6, dans lequel l'emballage comprend un film F₁ et éventuellement un film F₂, dans lequel F₁ comprend le polymère tel que défini dans l'une quelconque des revendications 1 à 4.

8. Catalyseur d'hydrogénation emballé selon la revendication 7, dans lequel le film F₁ a un poids surfacique de 20 à 150 g/m².

9. Catalyseur d'hydrogénation emballé selon la revendication 7 ou 8, dans lequel le film F₁ a une épaisseur située dans la plage allant de 10 à 150 micromètres.

10. Catalyseur d'hydrogénation emballé selon l'une quelconque des revendications 1 à 9, dans lequel le catalyseur d'hydrogénation est sous la forme d'un ou plusieurs parmi une poudre, des granulés, des copeaux, et des pastilles.

11. Catalyseur d'hydrogénation emballé selon l'une quelconque des revendications 1 à 10, lequel catalyseur d'hydrogénation emballé est contenu dans un récipient de transport pour le transport et la manipulation du catalyseur d'hydrogénation emballé,
lequel catalyseur d'hydrogénation emballé est enfermé à l'intérieur du récipient de transport.

12. Procédé pour préparer un catalyseur d'hydrogénation emballé, le procédé comprenant
(i) la fourniture d'un emballage, dans laquelle le matériau d'emballage comprend un polymère comprenant 60 à 100 % en poids de motifs répétitifs styrène ;
(ii) la fourniture d'un catalyseur d'hydrogénation, dans laquelle le catalyseur d'hydrogénation comprend du Ni ;
(iii) le remplissage de l'emballage selon (i) avec le catalyseur d'hydrogénation selon (ii) ;
(iv) le scellage hermétique de l'emballage rempli obtenu en (iii) d'une manière étanche aux gaz pour que soit obtenu un catalyseur d'hydrogénation emballé,
dans lequel le rapport en poids du catalyseur d'hydrogénation fourni en (ii), calculé sous la forme du poids total du catalyseur d'hydrogénation, au polymère compris dans le matériau d'emballage fourni en (i), calculé sous la forme du poids total du polymère, est situé dans la plage allant de 50 000/1 à 1/1.

13. Catalyseur d'hydrogénation emballé obtenu ou pouvant être obtenu par un procédé selon la revendication 12.

14. Procédé pour la conversion d'un ou plusieurs composés insaturés, comprenant
(A) la fourniture dans une zone de réaction d'un ou plusieurs composés insaturés et d'un catalyseur d'hydrogénation emballé selon l'une quelconque des revendications 1 à 11 et 13 ; et
(B) la mise en contact d'un ou plusieurs parmi le ou les composés insaturés fournis en (A) et du catalyseur d'hydrogénation emballé selon l'une quelconque des revendications 1 à 11 et 13 fourni en (A) avec de l'hydrogène à une température comprise dans la plage allant de 100 à 400°C.

15. Utilisation d'un catalyseur d'hydrogénation emballé selon l'une quelconque des revendications 1 à 11 et 13 dans une ou plusieurs parmi une désaromatisation, une désulfuration et une hydrogénation d'un ou plusieurs composés insaturés.
